(19) **Europäisches Patentamt**

**European Patent Office**

**Office européen des brevets**

(11) **EP 1 239 607 B1**

(12) **EUROPEAN PATENT SPECIFICATION**

(45) Date of publication and mention
of the grant of the patent:
**22.11.2006 Bulletin 2006/47**

(51) Int Cl.:
*H04B 7/06* (2006.01)    *H04B 7/08* (2006.01)
*H04N 5/28* (2006.01)

(21) Application number: **02251355.0**

(22) Date of filing: **27.02.2002**

(54) **Digital radio communication system**

Digitales Funkkommunikationssystem

Système de radiocommunication numérique

(84) Designated Contracting States:
**BE DE FR GB IT**

(30) Priority: **27.02.2001 GB 0104839**

(43) Date of publication of application:
**11.09.2002 Bulletin 2002/37**

(73) Proprietor: **BRITISH BROADCASTING
CORPORATION**
**London W1A 1AA (GB)**

(72) Inventor: **Zubrzycki, John Thomas,
c/o British Broadcasting
Tadworth,
Surrey KT20 6NP (GB)**

(74) Representative: **Robson, Aidan John**
**Reddie & Grose**
**16 Theobalds Road**
**London WC1X 8PL (GB)**

(56) References cited:
**EP-A- 1 069 706       WO-A-00/51265**
**GB-A- 2 196 211       GB-A- 2 307 375**
**US-A- 4 604 626       US-A- 5 203 018**
**US-A- 5 625 881**

Printed by Jouve, 75001 PARIS (FR)

**Description**

This invention relates to a digital radio communication system and, in particular, to such a system for use with a digital radio camera.

Our British Patent Application No. GB-A-2332124 describes a digital radio camera system in which a mobile camera transmits signals to a plurality of receivers in, for example, a sports stadium. The receivers are all coupled to a common summation device. However, the path from each receiver to the summation device includes a different delay so that the effects of interference between two or more receivers will be reduced.

This technique goes a long way to providing a highly reliable digital radio-camera system, but there is still a small possibility under certain conditions that multipath propagation from the radio-camera could result in flat fading to all the receiving antennas. COFDM usually combats flat fading by incorporating time interleaving to break up the resulting burst of errors into a series of smaller bursts which the error protection system can deal with. This only works if there is movement, such as would normally be found when using a DAB car radio. However, a radio-camera operator is quite likely to need to stand still.

WO 00/51265 (Motorola) describes a method for wireless communication between a plurality of transmission antennas and a receiver. The method commutates a group of symbols of an input data stream to produce a plurality of communication streams before spreading the streams and transmitting the streams from the plurality of antennas.

GB2307375 (BBC) discloses a mobile station for transmitting a signal to a plurality of fixed receiver antennas. The system determines which of the receiver antennas receives the best quality signal over time and can switch reception to one of the antennas in dependence of the result of the determination.

GB2196211 describes a communication system including a plurality of transmitting antennas and a receiver. At the receiver, the signal strength and degree of multipath distribution is measured. The antenna giving the best signal is selected for the next transmission.

A preferred embodiment of the present invention creates apparent antenna movement that can be used to improve the effectiveness of the system. Unlike traditional beam steering techniques, the idea is to create a rhythmic modulation of the spatial distribution of the RF field without detailed knowledge as to where the radio-camera is located with respect to the receive antenna. This avoids the usual problems of losing track of the radio-camera location under conditions of path blocking or in the presence of reflections.

Preferred embodiments can also be used to improve reception in systems where there is only a single receiving antenna, i.e., unlike the system described in our United Kingdom Patent Application No. GB-A-2332124.

The invention is defined in its various aspects in the appended claims to which reference should now be made.

Preferred embodiments of the invention will now be described in detail by way of example with reference to the accompanying drawings in which:

Figure 1 is a block diagram of a camera with delay lines coupled to the receivers of the invention;
Figure 2 is a block diagram of a second system in which the invention may be used; and
Figure 3 is a contour map of constant wavelength for an antenna a first distance from a wall;
Figure 4 is a contour map of constant wavelength for an antenna a second distance from a wall;
Figure 5 is a further contour map for an antenna 2 m from a reflection in a studio;
Figure 6 is a further contour map for an antenna in a sports stadium;
Figures 7a-7f show a number of different switching arrangements embodying the invention;
Figure 8 shows a process for cross-fading between two antennas at the camera;
Figure 9 shows apparatus for switching between an array of antennas at the camera;
Figure 10 shows an array antenna on a flexible belt;
Figure 11 shows a scanning beam antenna; and
Figure 12 shows schematically a switching frequency control loop for use in the system.

A system called Coded Orthogonal Frequency Division Multiplexing (COFDM) has been developed for Digital Audio Broadcasting (DAB) and Digital Terrestrial Television. The bits of each digital sample are distributed over a number of spaced carriers at a number of different time intervals. The Fast Fourier Transform (FFT) of the carriers at each time interval is taken. Each FFT comprises what is known as a symbol and a plurality of these are combined into a COFDM frame. The frames are then transmitted.

The distributing of bits of data in frequency and in time gives a system which is very error resistant and can cope with a high degree of multipath distortion.

Such a system is usually used as a single frequency network with a plurality of transmitters sending out synchronised frames of data. Any multipath propagation delays in such a system will tend to be long and, as a result, any fading notches in the received signal will usually be narrow in relation to the bandwidth occupied by the complete set of carriers. Thus, only some of the carriers fade out and error correction coding can easily recover the wanted information.

We have appreciated that the single frequency approach can be used in reverse with a digital radio camera. All that would be needed would be to combine all the receiving antenna outputs to provide a signal to a single COFDM demodulator. This would thereby obtain the goal of having a plurality of low cost receiving sites with one complex decoder.

In the broadcasting application, the multipath propagation delays will tend to be long. As a result, any fading notches caused by multipath propagation delays will usually be narrow in relation to bandwidth of the COFDM carriers. Thus, only some of the carriers will fade out and error correction coding will be able to recover the information required.

The radio camera is likely to be used in situations, e.g., a football stadium, where the differential delays of the signal picked up at each receiving site are very small. This will cause the width of any fading notches to be large, and in some circumstances, all the carriers may be lost. For example, if the radio camera moved into a position almost exactly between two receiving antennas with cable feeds of equal length to the receiver decoder, almost all the carriers would be lost and no signal would be fed to the receiver decoder.

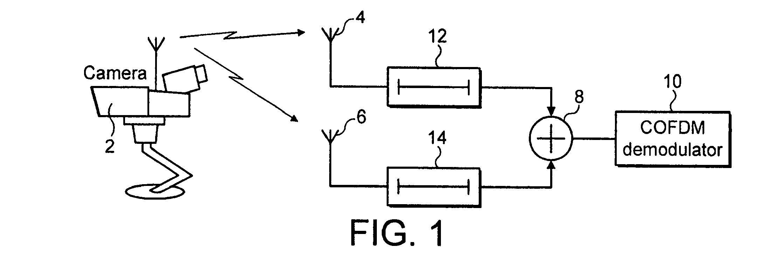

Figure 1 shows a radio camera system having a single camera and two receivers with delays included. As can be seen, delays 12 and 14 have been introduced in the feeds from antennas 4 and 6 to the adder 8 respectively. In practice, in a situation such as this only one delay needs to be introduced in one of the antenna feeds. However, providing delay in each feed gives a more versatile system where delays can be appropriately adjusted according to the environment in which the system is to be used.

At a complex location requiring many antennas, it is not necessary to give each antenna a unique delay. This is because the delays only need to be different for each area covered. Delay values can be re-used in different areas, providing the radio camera cannot transmit to two different antennas having the same delay as it moves from one area to the next. This avoids the problem of ending up with excessively large delays where a large number of antennas are used.

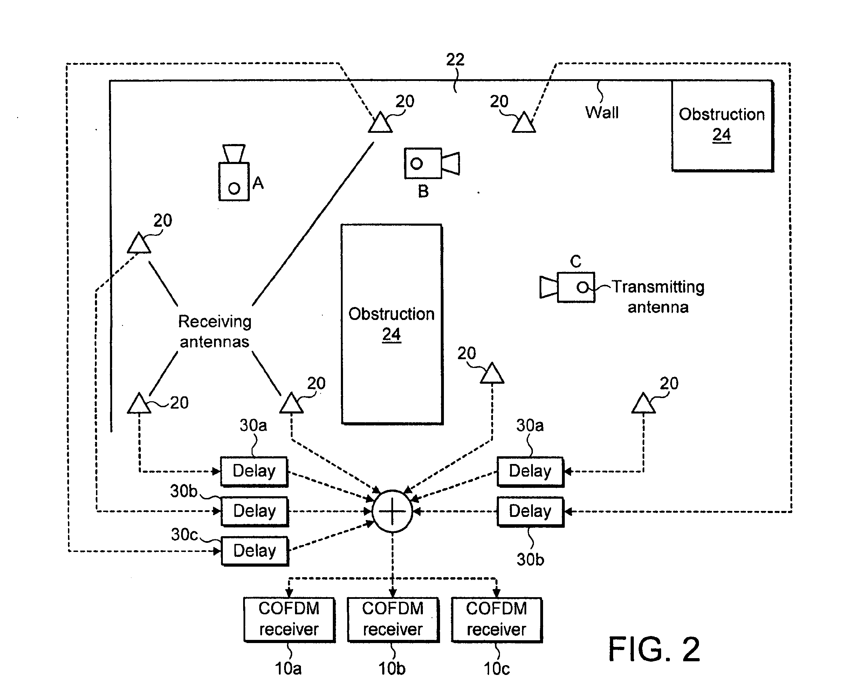

Such a system is illustrated in Figure 2. In this, a plurality of antennas 20 are provided in an area 22 bounded by a wall and having two obstructions 24. Three radio cameras are shown operating in this area and they are labelled A, B and C.

The receiving antennas 20 are all coupled to an adder 8 which provides output signals for three COFDM receivers 10, one for each radio camera.

Antennas which can not be seen by the same radio camera may have the same delay. Therefore, the two antennas 20 immediately adjacent obstruction 24 feed directly into the adder 8 with no delay. The other delays 30a, b and c are all different. However, it can be seen that two of the antennas 20 feed through a delay 30a. These again cannot be seen by one radio camera. Secondly, delays 30b cannot be seen by one radio camera. There is a final delay 30c connecting the final antenna 20 to the adder 8. The greatest delays would tend to be used in the most distant antennas to maximise effect.

An example of the technique will now be illustrated. In this example, it is assumed that a COFDM ensemble of 1,000 orthogonal carriers occupies a bandwidth of 20 MHz. This bandwidth is typical for current outside broadcast channels and will support nearly 100 Mbits per second using 64 QAM modulation (Quadrature Amplitude Modulation, a higher level of QPSK). If the error protection provided in the COFDM gives 100 percent redundancy in the signal, then the video bit rate could be nearly 50 Mbits per second. This could be sufficient to transmit very high quality MPEG2 coded signals, provided that the guard interval between COFDM symbols is not too large. It is assumed that if a carrier in the ensemble has a level 6 dB below the largest carrier, then it is not recoverable and requires error correction to recover the data.

The delay lengths required are calculated by first considering the combined power, P(f), of two interfering carriers with the same frequency that have traversed different paths:

$$P(f) = 1 + \cos\left(\frac{2\pi f l}{c}\right)$$

where:

$c$    is velocity of light
$f$    is frequency
$l$    is path length difference in vacuum

From this, it can be seen that the width of a fading notch, $\Delta f$, in a COFDM ensemble where carriers are weaker than -6 dB with respect to maximum power is:

$$\Delta f = \frac{100}{l} MHz$$

If half-rate coding is used, then half the carriers can be in the notch (refers to proximation). If the COFDM ensemble is 20 MHZ wide then $\Delta f$ will be 10 MHZ which, from the above equation, gives $l$ = 10 m.

A 10 m delay is equivalent to a time period of 33 ns which is only a small fraction of a symbol period of 50 $\mu$s In practice, an extra delay equivalent to the physical separation between the antennas is required to ensure that the signals from the radio camera can still sum with the minimum permitted differential delay in any camera position. If an area, of say, 50 m by 50 m is covered by four antennas positioned around the edges, e.g., one at each corner of the square, then the differential delay line length should be about 60 m to maintain the minimum permitted delay. This is a maximum delay of 180 m for the fourth antenna. These distances are lengths for transmissions in vacuum and it is of course better to use delay time.

The delay required is short compared to video field synchronisation, which would still be corrected by a frame store synchroniser, as is usual with radio cameras. In DAB, an extra delay is deliberately introduced by time interleaving the data as a countermeasure against fading. Time interleaving can also be used in the radio camera system. However, the diversity reception arrangement is intended to continuously present sufficient carriers to the receiver through the delayed summation process.

The length of the required delays are too long to be implemented as cable delays as losses would be too high at the typical receive microwave frequencies. Down conversion of the receive signal at the antenna to lower the cable loss or for use with an SAW delay line could be arranged. An alternative is to up convert the signal to the infra-red band and use an optical fibre as both the delay element and the interconnection cable to the summing point.

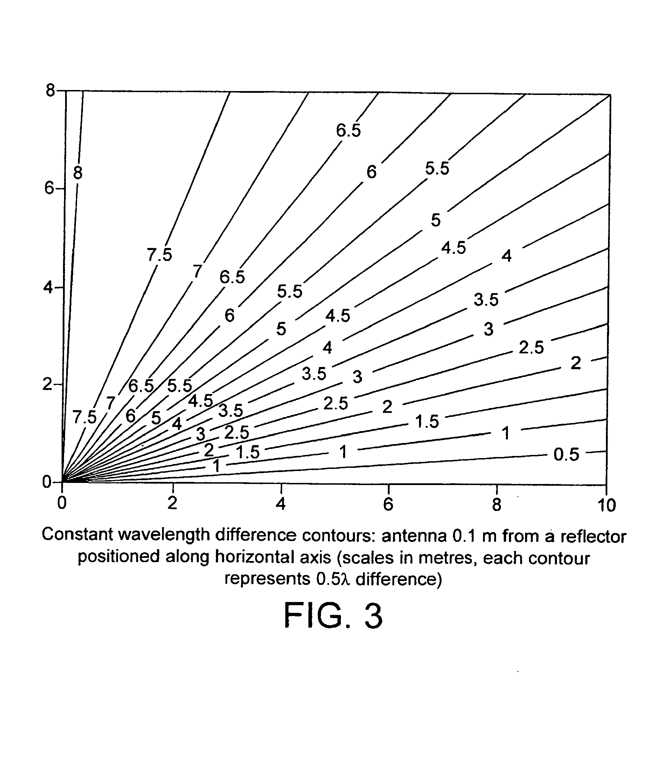

The effect of a perfectly reflecting flat surface on the RF field from a nearby microwave antenna on a camera is to produce a series of peaks in the field where the path difference between the direct and reflected waves is an integer number of wavelengths, and a series of nulls for every location where there is an extra half wavelength difference. Figure 3 is a contour map of constant wavelength difference over a floor area of 8 m by 10 m when an antenna operating at 12 GHZ is 10 cm away from a reflecting surface, e.g., a wall, positioned along the bottom edge of the diagram. The contours here represent each half-wavelength difference and so the peaks appear along the contours labelled with integer wavelength differences and the nulls appear along the contours in between. Even when carrying a COFDM signal, the path difference is almost identical for each subcarrier in the ensemble such that nearly all the subcarriers would be cancelled out when the receiving antenna is located at one of these nulls.

Moving the transmitting antenna further away from the reflecting surface causes the contour lines to fan out at a smaller angle from the reflector. In Figure 2, the antenna has been moved out to 20 cm from the reflector which has been sufficient to move peaks into the positions that were previously nulls (note here that the contour lines represent the peaks only, the nulls will be located between the contours). Therefore, if the antenna could be continuously moved a distance of 10 cm to-and-fro, then a null at the receiving antenna would only affect the signal for part of the time[1]. Of course, a mechanically moving antenna would not be suitable (noise, reliability, etc.), and so some form of antenna switching is needed. Alternatively, the switching antennas could be located at each of the receiving points, but since the basis of the system is to use many widely-spaced receiving antennas, this alternative might be more costly and more difficult to control.

[1]The exact amount of time depends on the characteristics of the COFDM equaliser.

The path distance, $d$, in terms of numbers of wavelengths can be determined from the following equation:

$$d = \frac{1}{\lambda}\left(\sqrt{(y+h)^2 + x^2} - \sqrt{(y-h)^2 + x^2}\right)$$

where:

$\lambda$     is wavelength
$x$     is position of the receiver along the reflector from the transmitter
$y$     is the distance of the receiver from the reflector
$h$     is distance of transmitter from reflector in $y$ direction

The above formula has been used to obtain the contour maps. However, noting that the reflector could be replaced by an image of the transmitter at a position, -*h*, on the *y* axis, leads to the option to use the diffraction formula, as used with optical diffraction gratings, in the far field:

$$(n + \tfrac{1}{2})\lambda = 2h\sin\theta$$

where:

θ    is the angle between the receiving position and the reflector representing the null contour (measured from *x,y* = 0,0)
*n*    is an integer

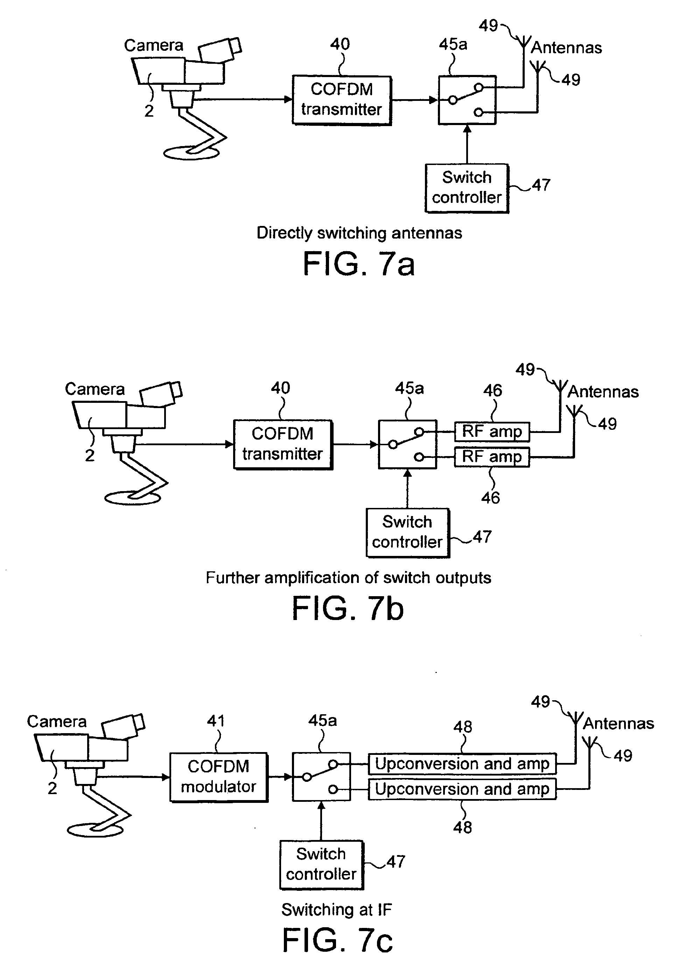

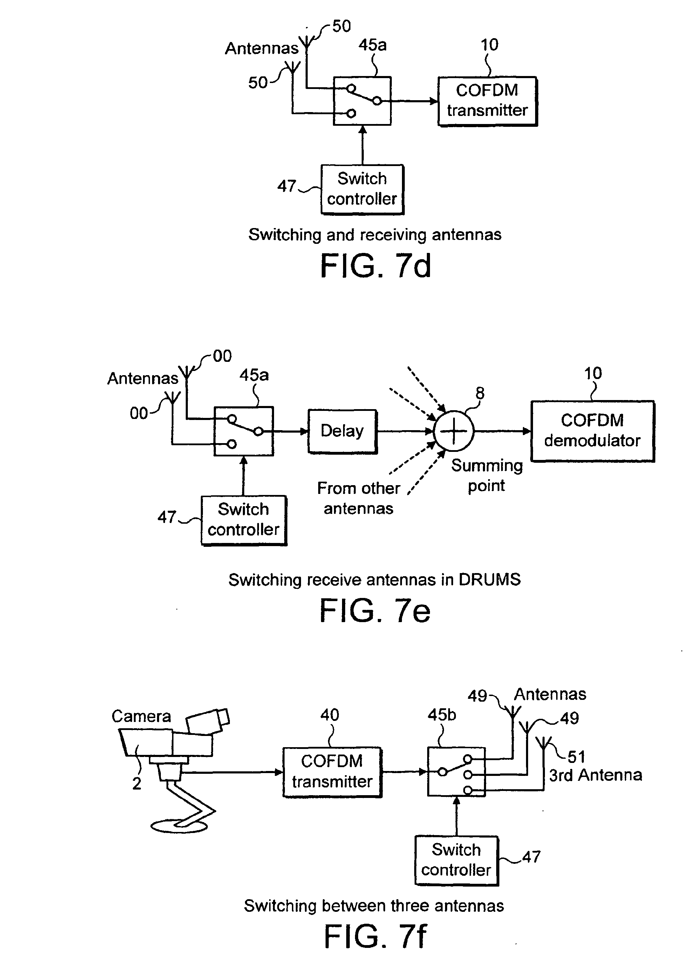

The choice of formula depends on the details of the situation and the approximations that can be made. This application uses the first formula to accurately depict the near field.
There will be many sources of reflections in a real situation, but the contribution of each reflector can be considered separately and superposition used to build up the complete picture (with suitable corrections for polarisation, absorption and diffraction).

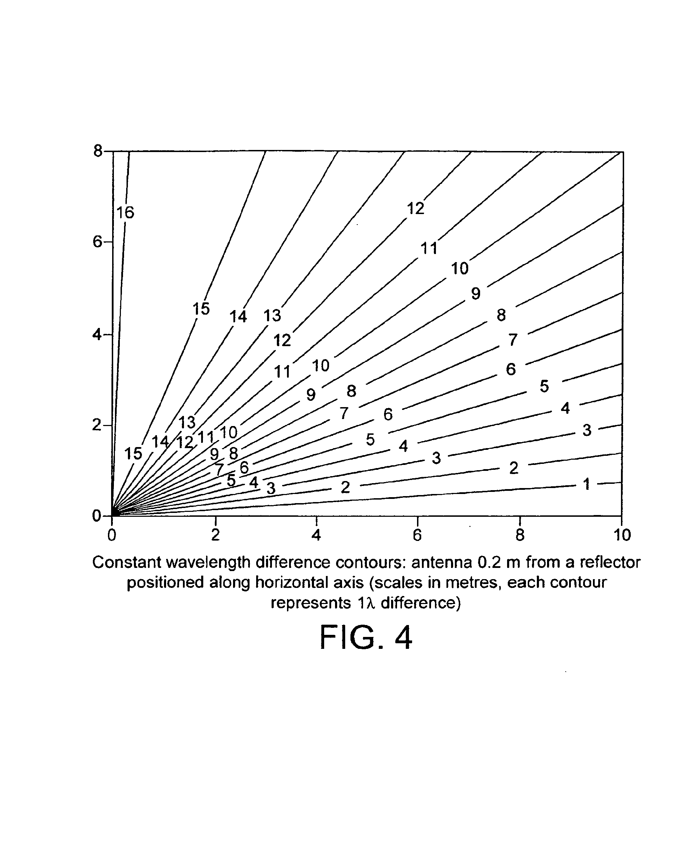

Figures 3 and 4 usefully illustrate the situation of looking down on a camera operator standing at the side of the studio, close to a wall, taking a shot of the action. It suggests that a pair of antennas on the radio-camera, separated horizontally by around 10 cm would be needed in this situation to change a null to a peak. As the camera operator moves away from the wall the spacing between the peaks and nulls reduces and so a 10 cm separation is more than adequate. Figure 3, which shows the very close spacing of the peaks with the camera at 2 m away from the reflector. Any movement of the antenna, or the camera, will cause the nulls to puncture the signal a higher rate than when the antenna is close to the reflector and moving at the same speed.

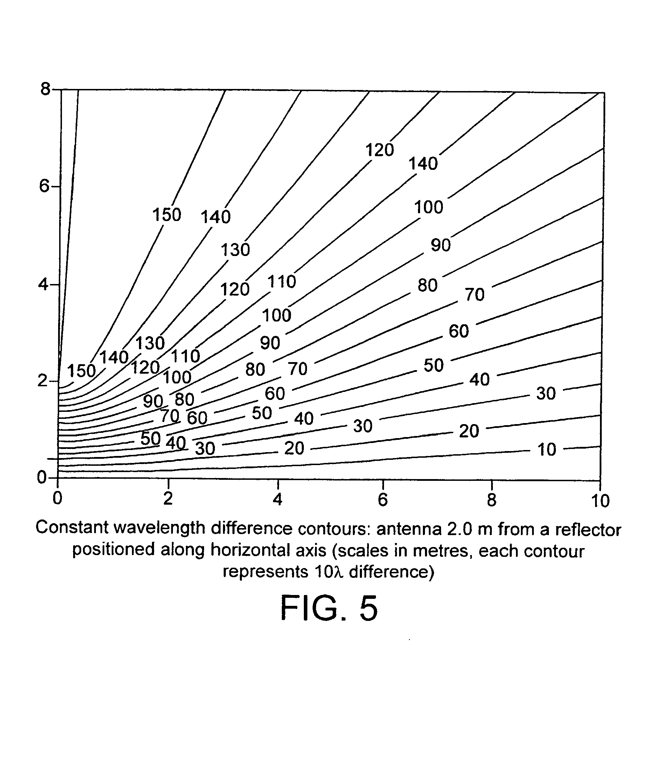

Figure 5 can be reinterpreted to show the side view of a studio with the reflector now being the studio floor and the 2 m height of the antenna being due to a shoulder-mounted camera. In a studio, it has been suggested that the receiving antenna(s) be placed amongst the studio lights, which might be positioned at a height of around 3-4 m. Note from Figure 3 that the floor reflection causes very closely spaced contours of constant path difference at these heights and so here the vertical antenna separation required is very small.

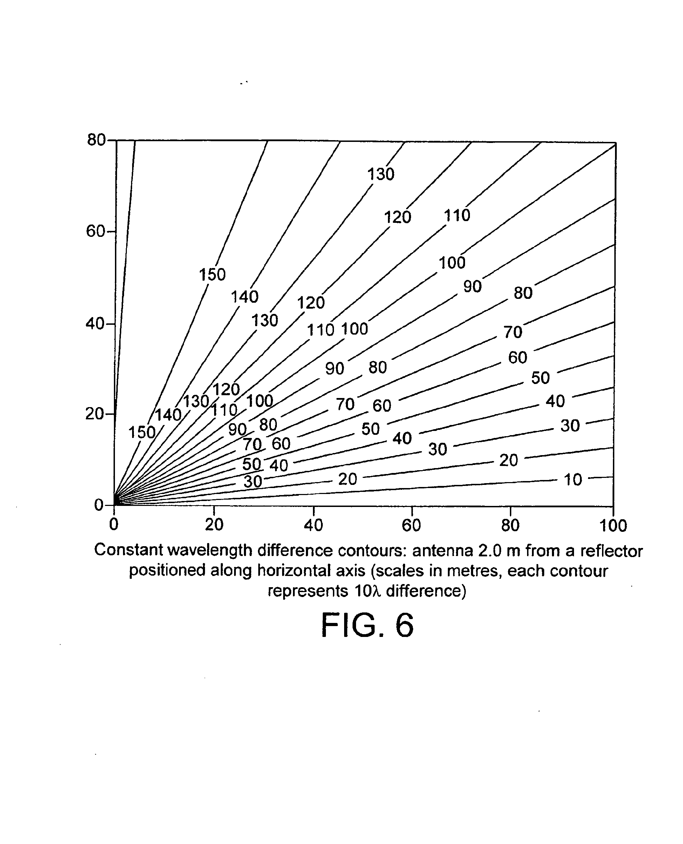

Figure 6 shows an example of the contours of constant path difference for a radio-camera being used at a sports stadium. The main difference between Figures 3 and 4 are the scale. Figure 4 should be interpreted as a side view, not a plan view. The reflector now represents the ground with the transmitter at 2 m height, i.e., on an operator's shoulder. The separation of the two transmitting antennas in this case needs to be about 1 cm to ensure that a null is turned into a peak for a receiving dish at a large horizontal distance away.
Note that if the receiving site is 100 m away, that the first null appears at a height of about 40 cm (this can be determined by noting that the 100λ contour reaches a height of 80 m at a distance of 100 m). Operationally dishes tend to be placed high in a gantry just under the stadium roof, and so they are potentially vulnerable to multipath from the ground, but this analysis suggests keeping the receiving site close to the ground to eliminate multipath. However, this ignores multipath from the sides of the stadium and path blocking by people and other obstacles close to the ground.
There are a number of possibilities for implementing the antennas, some of which are outlined here, but other types are doubtless possible. The antennas are described below in order of increasing complexity.
Switching the RF signal alternately between a pair of antennas is simple to implement. The switch can be implemented at one of several points in the transmission chain as shown in Figures 7a to 7e. Figure 7a shows the switch 45a and its controller 47 inserted between the COFDM transmitter 40 and the antennas 49. Figure 7b shows the addition of extra radio frequency amplification 46 after the switch 45a to compensate for loss in the switch. Figure 7c shows the switch 45a at the output of the COFDM modulator 41 so that it switches the signal at baseband or intermediate frequency. The signals from the switch have to be separately upconverted and amplified 48. Alternatively, the receiving antennas can be switched as shown in Figure 7d where the switch 45a is placed between the receiving antennas 50 and the COFDM demodulator 10. Figure 7e shows the switch incorporated into one of the antennas in a system of the type described in British Patent Application No. GB-A-2332124, where the switch 45a is placed between two of the antennas 50 and one of the delays 12. In this situation some or all of the antennas could be switched. This switching could either be related to the frame structure of the signal multiplex or be free running. However, the former case may have a better error performance by switching at times suited to the error protection strategy used.
The antenna spacing depends on the local environment and so should be adjustable in some way. Generally, the antennas need to be spaced both vertically and horizontally to account for reflections from surfaces at nearly every orientation. Figure 7f shows the implementation of a third antenna 51 and a three-way switch 45b that would be needed to deal with surfaces oriented along the axis between the first two antennas, but it may not be needed on a real situation because the field pattern is likely to be very complex anyway.

The main problems with switching are that sometimes both transmitting antennas may be producing a null at the receiving site and so switching between them just changes the field pattern from one null straight to another. Also the spectral harmonics produced by switching may be undesirable.

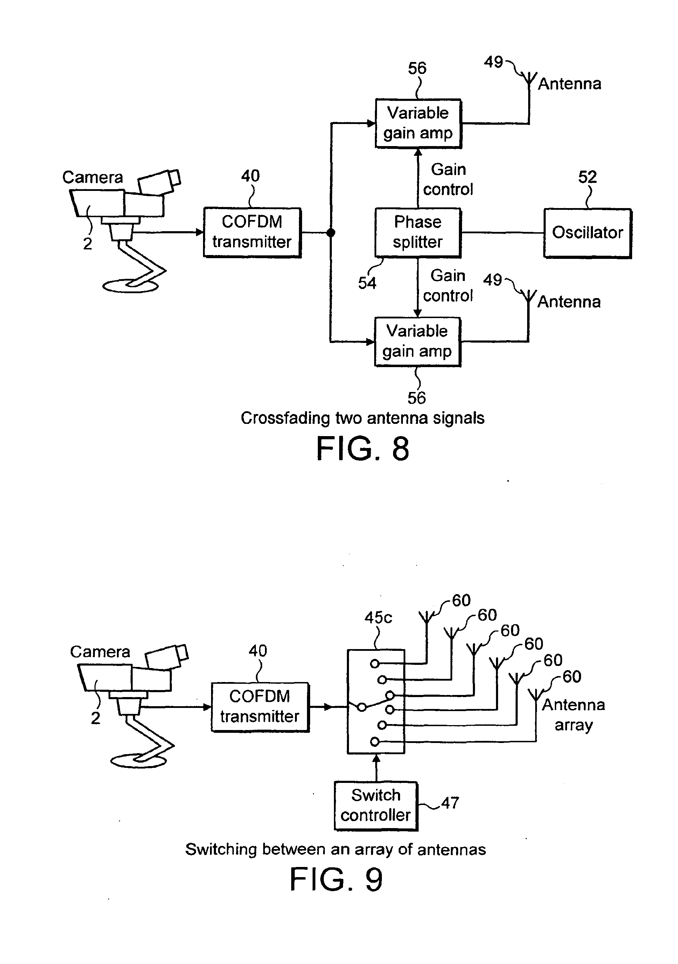

Crossfading the signal between the two antennas will reduce switching transients as shown in Figure 8. An oscillator 52 provides a signal of the shape desired for the crossfade, such as a sine wave. A phase splitter 54 produces a plurality of versions of the crossfade signal with a known phase difference between them, which is given by the formula 360/n degrees, where n is the number of outputs of the phase splitter (two outputs are shown in Figure 8 which would therefore be 180 degrees out of phase with each other). The signal from the COFDM transmitter 40 is split to feed a variable gain amplifier 56 and antenna 49. The gain of each of the amplifiers 56 is controlled by one of the outputs of the phase splitter 54. This has two benefits:

- gives a gradual changeover between the transmitting sources;
- reduces the switching harmonics.

The gradual changeover between the transmitting antennas may help reduce the impact of phase jitter at the receiver, but it does not remove the situation of the RF field from both antennas producing nulls at the receiver at the same time. It is misleading to draw the analogy with stereo audio where an audio source can be made to appear at any position between a pair of loudspeakers just by changing the relative power levels from each loudspeaker. Basically, if each transmitting antenna separately produces a null at the receiving point due to multipath, then, by using superposition, the combined outputs of both antennas still produces a null.

It should also be noted that antenna elements separated by half the carrier wavelength or more will produce their own nulls (as in Young's two-slit experiment of optical interference); in many practical situations the required antenna spacing is many wavelengths.

A simple extension of the methods described above is shown in Figure 9 where an array of antenna elements 60 and then switch the RF signal progressively along the array using a multiple switch 45c to create the apparent movement of the transmitting source (analogous to some types of decorative illuminations, such as the light-pipe). This method makes the source emit from intermediate positions reducing the chance of jumping from one null to another. Making the antenna spacing less than a quarter of the carrier wavelength removes this chance completely.

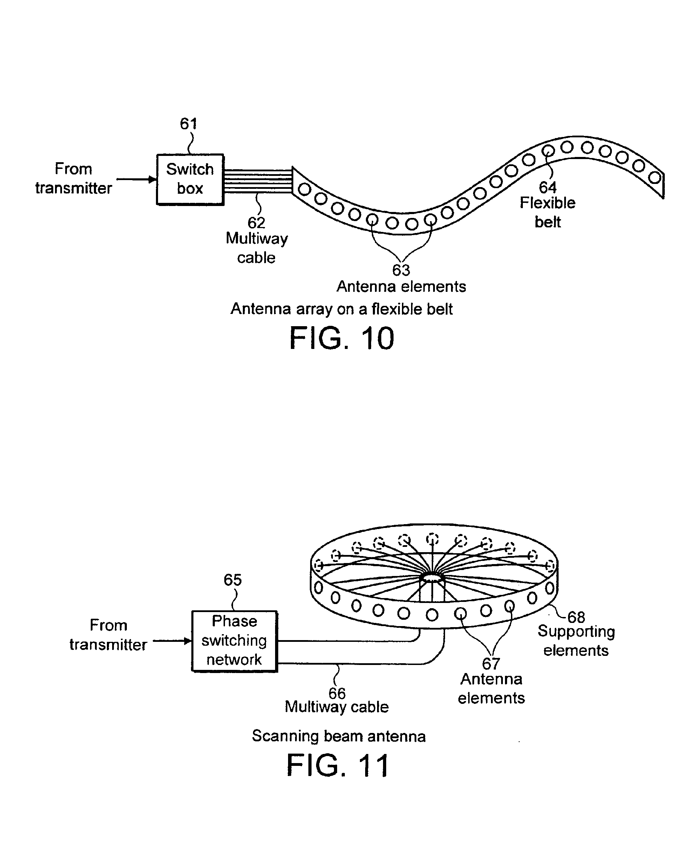

One practical implementation of such an array, shown in Figure 10, might be as a series of antenna patches 63 mounted along on a flexible belt 64 which could be wrapped round a radio-camera mast (or other suitable structure when remote cameras are mounted on vehicles, etc.). The exact shape of each patch would depend on various factors, such as beam width and polarisation.

The effective antenna spacing can be changed by varying the number of radiating elements activated. The simplest form would be a linear array, but other shapes may prove beneficial.

An extension of the switched array is to crossfade the RF power between the elements in an antenna array to avoid sudden phase changes. No extra interference nulls will be created in the RF field if the elements are separated by less than half the carrier wavelength.

Figure 11 shows a circular multi-element transmitting array 67 supported on a ring 68 and fed like a phased array from a phase switching network 65 to emit a narrow beam which rotates round the antenna at a suitable rate, like the light beam from a lighthouse. In this situation, multipath is reduced because illumination of the reflectors is greatly reduced when the beam is pointing to the receiver. However, the transmission time is small because the data must be sent when the beam is pointing to the receiver.

This "lighthouse" suggestion does point out that the delayed RF field which caused fading at the receive site must have been emitted from the transmitting antenna in a different direction from the directly received field.

All the antenna options above work without any feedback control, but they do require the antenna switching or crossfading rate and the spacing to be set up according to the environment in which it will be used. Since it is an operational requirement for the radio-camera to have a return video feed, then there is the opportunity to include a control channel to set the antenna switching rate and spacing in a feedback loop. Antenna "length" could be effectively changed in an antenna array by including or excluding elements at one end.

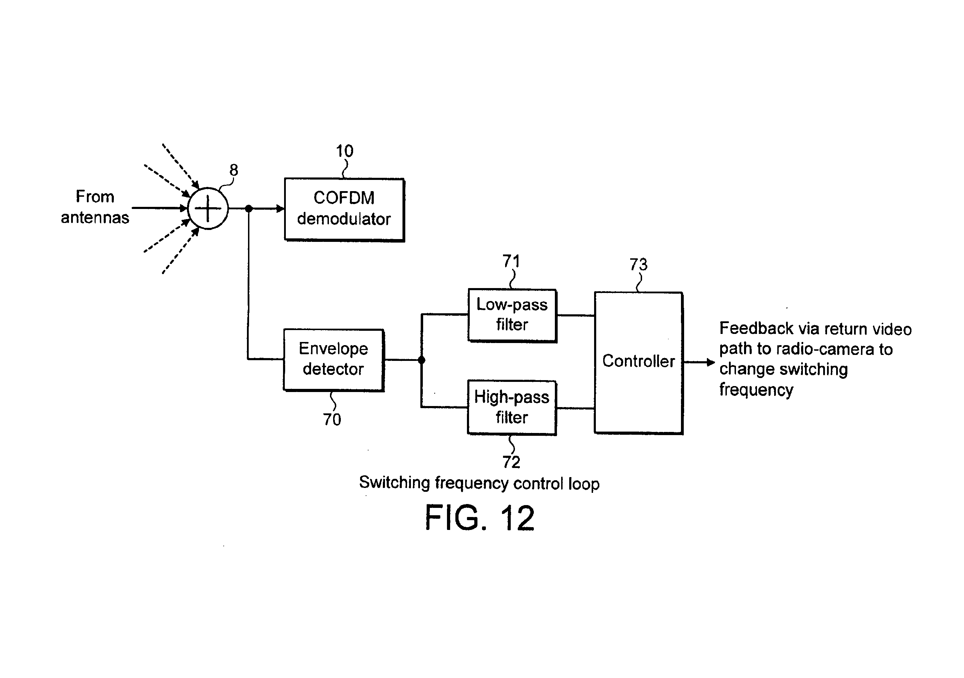

A proposed sensing signal for the control loop is to look at the amplitude envelope of the signal to detect fluctuations caused by the reflections as shown in Figure 12. The received signal at the COFDM demodulator 10 could be applied in parallel to an envelope detector 70 and then split to feed a low-pass 71 and high-pass 72 filter pair with their transitions centred on the fluctuation rate of the RF field that the antenna switching is trying to achieve. The filter outputs would then be smoothed and used by the controller 73 for its decisions.

It should be noted that a camera which switches transmission between two or more antennas can also be used to improve reception in systems employing a single receiver antenna and error protection for data.

**Claims**

1. A digital radio communication system comprising:

   a mobile transmitter (2) transmitting error-protected digital data divided into blocks which are interleaved in time; transmitting means configured to transmit the data sequentially through a plurality of antennas (49) one at a time by switching transmission to each antenna for a period shorter than the duration of an interleaved block to create apparent movement of the transmitting source; and
   at least one receiving antenna (50) coupled to a receiver incorporating an error-protection decoder to extract the original digital data from the received signal,

   wherein the transmitting antenna spacing and the separation between the first and last antennas is sufficient such that if the signal from one antenna would result in destructive interference at the receiving antenna, then the signal transmitted from one or more of the other transmitting antennas is sufficiently large to allow enough signal to be detected to extract the original data by using the error-protection coding.

2. A digital radio communication system according to claim 1, wherein the antenna spacing is less than a quarter of the carrier wavelength.

3. A digital radio communication system according to claim 1 or 2, in which the signal to be transmitted is switched between two antennas (49).

4. A digital radio communication system according to any preceding claim, in which the signal is amplified after it has been switched and before sending it to the antennas.

5. A digital radio communication system according to any preceding claim, in which the signal is switched at an intermediate frequency and then upconverted and amplified before sending it to the antennas.

6. A digital radio communication system according to claim any preceding claim, in which the signal is switched between two or more receiving antennas (50) before being sent to the receiver, the switching being done at the received frequency or at an intermediate frequency.

7. A digital radio communication system according to claim 6, in which some of the receiving antennas (50) are connected to the receiver via a fixed delay (12) and a summation means (8), and at least one of the receiving antennas is replaced with two or more antennas connected to a switch before the summation means.

8. A digital radio communication system according to any preceding claim in which the signal is switched between three antennas at the receiver or the transmitter.

9. A digital radio communication system according to any preceding claim in which the transmitting means are configured to crossfade the signal at the transmit antennas, such that the signal amplitude is continuously raised and lowered at each antenna.

10. A digital radio communication system according to any preceding claim in which the signal is switched between an array of antennas at the transmitter or the receiver.

11. A digital radio communication system according to any preceding claim in which the transmitter antenna array is mounted on a flexible backing (64) which can be mounted at any desired orientation on available mounting surfaces.

12. A digital radio communication system according to any preceding claim wherein the means for transmitting has a unit adapted to control the switching frequency, and wherein at the receiver the received signal is applied to an envelope detector (70) to deprive a digital or an analogue control signal to be fed back to the unit.

13. A digital radio communication system according to any preceding claim in which the switching between antennas comprises a gradual changeover of the signal between the antennas.

14. A digital radio communication system according to any preceding claim, wherein the mobile transmitter is a mobile digital radio camera.

**15.** A digital radio communication system according to claim 14, in which the transmitter antennas array is mounted on a flexible backing (64), and the transmitter array is wrapped round a radio camera mast, or other suitable structure when a remote camera is mounted on a vehicle.

**Patentansprüche**

**1.** Digitales Funkkommunikationssystem, das Folgendes umfasst:

einen mobilen Sender (2), der fehlergeschützte digitale Daten sendet, die in zeitlich verschachtelte Blöcke unterteilt sind;
Sendemittel, die so konfiguriert sind, dass sie die Daten sequentiell durch eine Mehrzahl von Antennen (49) nacheinander durch Schalten der Übertragung zu jeder Antenne für eine Periode senden, die kürzer ist als die Dauer eines verschachtelten Blocks, um eine scheinbare Bewegung der Sendequelle zu erzeugen; und
wenigstens eine Empfangsantenne (50), die mit einem Empfänger gekoppelt ist, der einen Fehlerschutzdecoder beinhaltet, um die ursprünglichen digitalen Daten aus dem empfangenen Signal zu extrahieren,

wobei der Sendeantennenabstand und die Entfernung zwischen der ersten und letzten Antenne ausreicht, damit, wenn das Signal von einer Antenne zu einer destruktiven Interferenz an der Empfangsantenne führen würde, das von einer oder mehreren der anderen Sendeantennen gesendete Signal groß genug ist, damit genügend Signal erfasst werden kann, um die ursprünglichen Daten mittels Fehlerschutzcodierung zu extrahieren.

**2.** Digitales Funkkommunikationssystem nach Anspruch 1, wobei der Antennenabstand kleiner als ein Viertel der Trägerwellenlänge ist.

**3.** Digitales Funkkommunikationssystem nach Anspruch 1 oder 2, bei dem das zu sendende Signal zwischen zwei Antennen (49) umgeschaltet wird.

**4.** Digitales Funkkommunikationssystem nach einem der vorherigen Ansprüche, bei dem das Signal verstärkt wird, nachdem es umgeschaltet wurde und bevor es zu den Antennen gesendet wird.

**5.** Digitales Funkkommunikationssystem nach einem der vorherigen Ansprüche, bei dem das Signal auf einer Zwischenfrequenz geschaltet und dann vor dem Senden zu den Antennen aufwärts gemischt und verstärkt wird.

**6.** Digitales Funkkommunikationssystem nach einem der vorherigen Ansprüche, bei dem das Signal vor dem Senden zum Empfänger zwischen zwei oder mehr Empfangsantennen (50) geschaltet wird, wobei das Schalten auf der empfangenen Frequenz oder auf einer Zwischenfrequenz erfolgt.

**7.** Digitales Funkkommunikationssystem nach Anspruch 6, bei dem einige der Empfangsantennen (50) über eine feste Verzögerung (12) und ein Summiermittel (8) mit dem Empfänger verbunden sind und wenigstens eine der Empfangsantennen durch zwei oder mehr Antennen ersetzt wird, die vor dem Summiermittel mit einem Schalter verbunden sind.

**8.** Digitales Funkkommunikationssystem nach einem der vorherigen Ansprüche, bei dem das Signal zwischen drei Antennen am Empfänger oder am Sender geschaltet wird.

**9.** Digitales Funkkommunikationssystem nach einem der vorherigen Ansprüche, bei dem die Sendemittel so konfiguriert sind, dass sie das Signal an den Sendeantennen überblenden, so dass die Signalamplitude an jeder Antenne kontinuierlich gehoben und gesenkt wird.

**10.** Digitales Funkkommunikationssystem nach einem der vorherigen Ansprüche, bei dem das Signal zwischen einem Antennenfeld am Sender oder am Empfänger geschaltet wird.

**11.** Digitales Funkkommunikationssystem nach einem der vorherigen Ansprüche, bei dem das Senderantennenfeld auf einer flexiblen Auflage (64) montiert ist, die in einer beliebigen gewünschten Ausrichtung auf verfügbaren Montageflächen montiert werden kann.

**12.** Digitales Funkkommunikationssystem nach einem der vorherigen Ansprüche, wobei das Mittel zum Senden eine Einheit mit der Aufgabe hat, die Umschaltfrequenz zu regeln, und wobei am Empfänger das empfangene Signal an einen Hüllkurvendetektor (70) angelegt wird, um ein digitales oder ein analoges Steuersignal abzuleiten, das zur Einheit zurückgespeist wird.

**13.** Digitales Funkkommunikationssystem nach einem der vorherigen Ansprüche, bei dem das Umschalten zwischen Antennen ein allmähliches Umschalten des Signals zwischen den Antennen umfasst.

**14.** Digitales Funkkommunikationssystem nach einem der vorherigen Ansprüche, wobei der mobile Sender eine mobile digitale Funkkamera ist.

**15.** Digitales Funkkommunikationssystem nach Anspruch 14, bei dem das Senderantennenfeld auf einer flexiblen Auflage (64) montiert ist und das Senderfeld um einen Funkkameramasten oder eine andere geeignete Struktur gewickelt ist, wenn eine Fernkamera an einem Fahrzeug montiert ist.

**Revendications**

**1.** Système de communication radio numérique comprenant :

un émetteur mobile (2) transmettant des données numériques protégées contre les erreurs divisées en blocs qui sont intercalés dans le temps;
des moyens de transmission configurés pour transmettre les données séquentiellement par une pluralité d'antennes (49) une à la fois, en commutant la transmission vers chaque antenne pendant une période plus courte que la durée d'un bloc intercalé afin de créer un mouvement apparent de la source d'émission; et
au moins une antenne de réception (50) couplée à un récepteur incorporant un décodeur de protection contre les erreurs pour extraire les données numériques originales du signal reçu,

où l'espacement des antennes de transmission et la séparation entre la première et la dernière antennes, sont suffisants pour que si le signal d'une antenne devait résulter en une interférence destructrice à l'antenne de réception, le signal transmis de l'une ou de plusieurs des autres antennes de transmission, est alors suffisamment grand pour permettre qu'assez de signal soit détecté pour extraire les données originales en utilisant le codage de protection contre les erreurs.

**2.** Système de communication radio numérique selon la revendication 1, dans lequel l'espacement des antennes est moins d'un quart de la longueur de l'onde porteuse.

**3.** Système de communication radio numérique selon la revendication 1 ou 2, dans lequel le signal à transmettre est commuté entre deux antennes (49).

**4.** Système de communication radio numérique selon l'une quelconque des revendications précédentes, dans lequel le signal est amplifié après avoir été commuté et avant d'être envoyé aux antennes.

**5.** Système de communication radio numérique selon l'une quelconque des revendications précédentes, dans lequel le signal est commuté à une fréquence intermédiaire et puis il est transposé par montée en fréquence et amplifié avant d'être envoyé aux antennes.

**6.** Système de communication radio numérique selon l'une quelconque des revendications précédentes, dans lequel le signal est commuté entre deux antennes de réception ou plus (50) avant d'être envoyé au récepteur, la commutation étant faite à la fréquence reçue ou à une fréquence intermédiaire.

**7.** Système de communication radio numérique selon la revendication 6, dans lequel certaines des antennes de réception (50) sont connectées au récepteur par un retard fixe (12) et un moyen de totalisation (8), et au moins l'une des antennes de réception est remplacée par deux antennes ou plus connectées à un commutateur avant le moyen de totalisation.

**8.** Système de communication radio numérique selon l'une quelconque des revendications précédentes, dans lequel le signal est commuté entre trois antennes au niveau du récepteur ou de l'émetteur.

**9.** Système de communication radio numérique selon l'une quelconque des revendications précédentes, dans lequel les moyens de transmission sont configurés pour mettre le signal en fondu enchaîné aux antennes de transmission, de telle sorte que l'amplitude du signal est continuellement augmentée et affaiblie à chaque antenne.

**10.** Système de communication radio numérique selon l'une quelconque des revendications précédentes, dans lequel le signal est commuté entre un réseau d'antennes au niveau de l'émetteur ou du récepteur.

**11.** Système de communication radio numérique selon l'une quelconque des revendications précédentes, dans lequel le réseau d'antennes de l'émetteur est monté sur un support flexible (64) qui peut être monté dans n'importe quelle orientation désirée sur des surfaces de montage disponibles.

**12.** Système de communication radio numérique selon l'une quelconque des revendications précédentes, dans lequel le moyen émetteur a une unité adaptée pour contrôler la fréquence de commutation et dans lequel le signal reçu au récepteur est appliqué à un détecteur d'enveloppe (70) pour dériver un signal de commande numérique ou analogue à renvoyer à l'unité.

**13.** Système de communication radio numérique selon l'une quelconque des revendications précédentes, dans lequel la commutation entre antennes comprend un changement graduel du signal entre les antennes.

**14.** Système de communication radio numérique selon l'une quelconque des revendications précédentes, dans lequel l'émetteur mobile est une caméra radio numérique mobile.

**15.** Système de communication radio numérique selon la revendication 14, dans lequel le réseau d'antennes de l'émetteur est monté sur un support flexible (64), et le réseau émetteur est enroulé autour d'un mât de radio caméra ou d'une autre structure appropriée lorsqu'une caméra à distance est montée sur un véhicule.

FIG. 1

FIG. 2

Constant wavelength difference contours: antenna 0.1 m from a reflector positioned along horizontal axis (scales in metres, each contour represents 0.5λ difference)

# FIG. 3

Constant wavelength difference contours: antenna 0.2 m from a reflector positioned along horizontal axis (scales in metres, each contour represents 1λ difference)

# FIG. 4

Constant wavelength difference contours: antenna 2.0 m from a reflector
positioned along horizontal axis (scales in metres, each contour
represents 10λ difference)

# FIG. 5

Constant wavelength difference contours: antenna 2.0 m from a reflector positioned along horizontal axis (scales in metres, each contour represents 10λ difference)

# FIG. 6

Directly switching antennas

# FIG. 7a

Further amplification of switch outputs

# FIG. 7b

Switching at IF

# FIG. 7c

Switching and receiving antennas

# FIG. 7d

Switching receive antennas in DRUMS

# FIG. 7e

Switching between three antennas

# FIG. 7f

56

49 Antenna

Variable
gain amp

Gain
control

Camera

40

52

COFDM
transmitter

Phase
splitter

Oscillator

2

54

Gain
control

49 Antenna

Variable
gain amp

56

Crossfading two antenna signals

## FIG. 8

45c

60
60
60
60
60
60

Camera

40

COFDM
transmitter

Antenna
array

2

Switch
controller

47

Switching between an array of antennas

## FIG. 9

Antenna array on a flexible belt

## FIG. 10

Scanning beam antenna

## FIG. 11

Switching frequency control loop

# FIG. 12